# FASCICULE DE BREVET EUROPEEN

(11) **EP 0 356 298 B1**
(45) Date de publication et mention de la délivrance du brevet: **15.11.1995**
(21) Numéro de dépôt: 89402239.1
(22) Date de dépôt: 08.08.1989
(51) Int. Cl.: H04N 5/64

(54) **Installation sonore, en particulier stéréophonique, pour téléviseur**
Tonanlage, besonders stereophonische, für Fernsehgerät
Sound set, particularly a stereophonic one, for television apparatus

(30) Priorité: 16.08.1988 FR 8810914
(43) Date de publication de la demande: 28.02.1990
(73) Titulaire: SOCIETE ELECTRONIQUE DE LA REGION PAYS DE LOIRE, F-75020 Paris (FR)
(72) Inventeur: Huerre, Dominique, F-92045 Paris la Défense (FR); Pissot, Guy, F-92045 Paris la Défense (FR)
(74) Mandataire: Ruellan-Lemonnier, Brigitte

(56) Documents cités:
- DE-A- 2 806 580
- DE-C- 969 637
- PATENT ABSTRACTS OF JAPAN, vol. 7, no. 204 (E-197)[1349], 9 septembre 1983, page 109 E 197; & JP-A-58101596
- PATENT ABSTRACTS OF JAPAN, vol. 9, no. 181 (E-331)[1904], 26 juillet 1985, page 23 E 331; & JP-A-6051084

## Description

La présente invention a pour objet une installation sonore, en particulier stéréophonique, pour téléviseur.

Les téléviseurs fonctionnant avec un son à "haute fidélité", en particulier un son stéréophonique, peuvent avoir deux types différents d'installation de haut-parleurs. Dans un premier cas, ces téléviseurs sont reliés à des enceintes acoustiques extérieures qui permettent de reproduire un son de bonne qualité, mais sont encombrants. Dans un second cas, les téléviseurs comportent des haut-parleurs à l'intérieur de leur coffret. Ces haut-parleurs peuvent être disposés soit en façade, soit sur les côtés du coffret. Pour des raisons d'esthétique, les "colonnes sonores" de haut-parleurs de façade, disposées de chaque côté du tube cathodique, sont étroites, et ne permettent donc pas d'utiliser des haut-parleurs de graves de dimensions suffisantes pour assurer une bonne reproduction sonore. Lorsque les haut-parleurs sont disposés sur les côtés gauche et droit du coffret, l'effet sonore obtenu n'est pas satisfaisant car, même lorsque les haut-parleurs sont de bonne qualité, le son, en particulier les fréquences hautes du spectre sonore, qui sont directives, est émis perpendiculairement à l'axe du tube cathodique, ce qui ne procure pas à l'utilisateur la sensation d'une source sonore correctement dirigée. En outre, il est difficile d'automatiser la fixation des haut-parleurs dans les coffrets de ces téléviseurs connus.

On connaît d'après le document DE-A- 2.806.580 une installation sonore pour téléviseur, comportant des boîtiers pouvant pivoter dans des logements fixés aux parois latérales du coffret du téléviseur, mais la fabrication d'une telle installation est difficilement automatisable.

La présente invention a pour objet une installation sonore pour téléviseur, en particulier une installation stéréophonique, qui permette d'utiliser des haut-parleurs, en particulier des haut-parleurs de graves, de bonne qualité, cette installation étant intégrée au coffret du téléviseur et procurant un effet sonore à sources correctement dirigées, le montage de cette installation devant être facile à automatiser.

L'installation conforme à l'invention comporte au moins un boîtier pivotant dans l'épaisseur d'une paroi latérale du coffret du téléviseur, et se caractérise en ce qu'il vient se fixer par encliquetage sur un cadre opposé dans une découpe de la paroi latérale du coffret, grâce à des têtons solidaires du cadre et autour desquels pivote le boîtier. De façon avantageuse, le cadre comporte un dispositif de frein tel qu'un dispositif à frottement, permettant d'immobiliser le boîtier en n'importe quelle position angulaire entre ses positions extrêmes.

La présente invention sera mieux comprise à la lecture de la description détaillée d'un mode de réalisation, pris comme exemple non limitatif et illustrée par les dessins annexés, sur lequel :
- la figure 1 est une vue en perspective d'un téléviseur avec installation sonore conforme à l'invention,
- la figure 2 est une vue en perspective d'un boîtier de l'installation sonore du téléviseur de la figure 1 avec arraché de l'ébénisterie,
- la figure 3 est une vue en coupe verticale du cadre du boîtier de la figure 2,

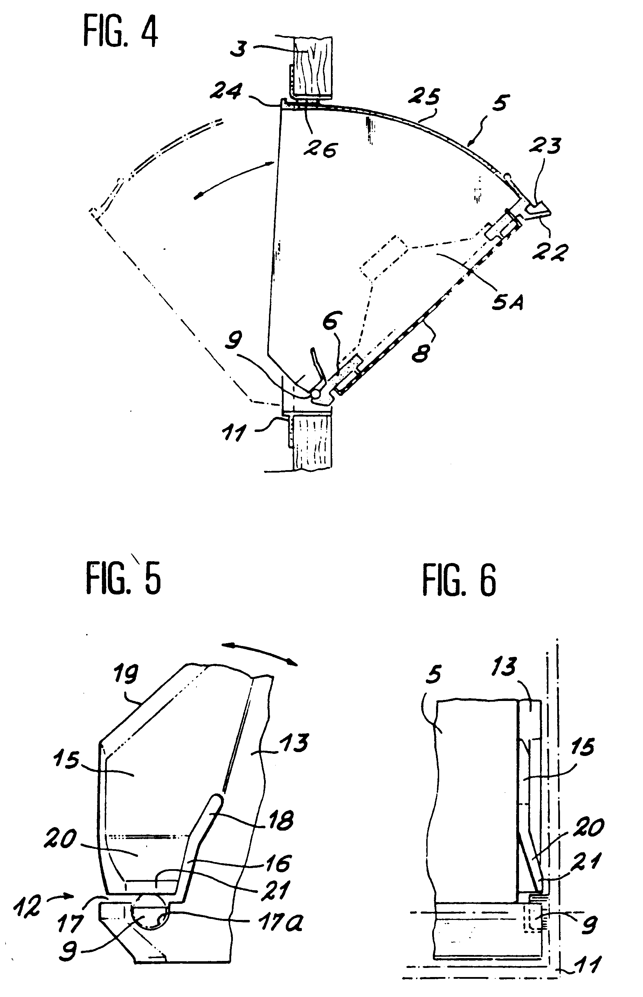

- la figure 4 est une vue en coupe selon IV-IV du boîtier de la figure 3, et
- les figures 5 et 6 sont des vues en plan de détails de l'articulation du boîtier de la figure 2.

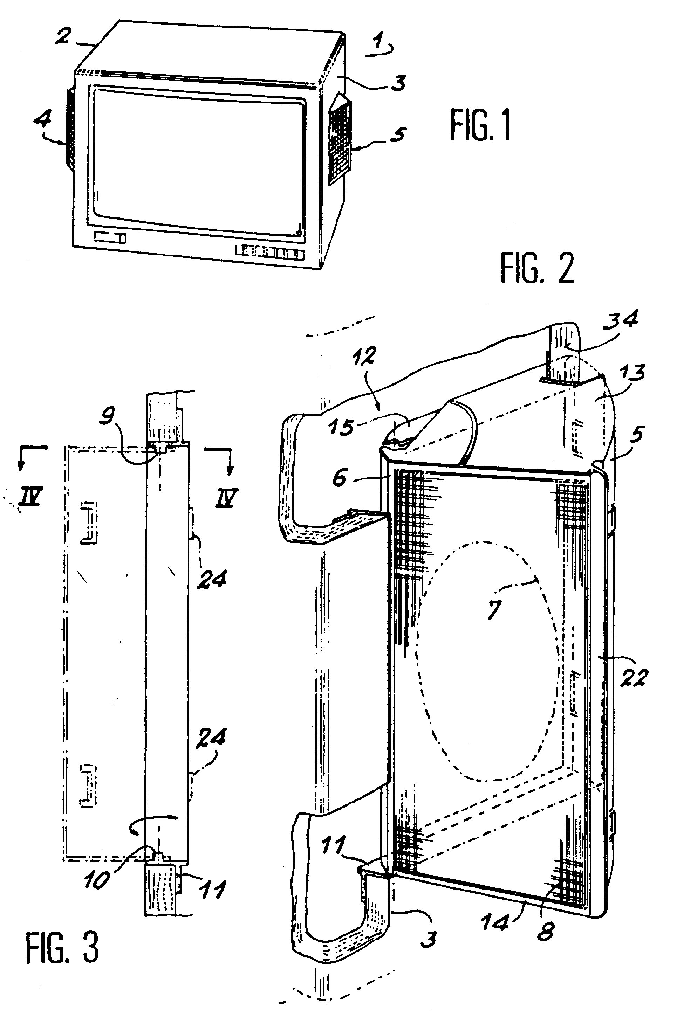

Le téléviseur 1 représenté en figure 1 comporte une installation stéréophonique, mais il est bien entendu que l'invention s'applique également à un téléviseur à installation monophonique à un seul ensemble de haut-parleurs (haut-parleurs fixés dans le même boîtier) disposé sur une des faces latérales du coffret du téléviseur ou bien à deux ensembles de haut-parleurs, chaque ensemble étant disposé dans un boîtier sur une des parois latérales du coffret du téléviseur, les deux ensembles étant branchés en parallèle.

Dans une découpe pratiquée dans chacune des parois latérales 2, 3 du coffret du téléviseur 1 on dispose un boîtier pivotant 4,5 respectivement ; seule la découpe 3A recevant le boîtier 5 étant représentée sur le dessin. Chaque boîtier, ayant sensiblement la forme d'un secteur de cylindre, renferme un ou plusieurs haut-parleurs. Un seul haut-parleur, référencé 5A, a été représenté sur le dessin. Ces boîtiers peuvent être disposés à peu près au centre des faces correspondantes ou décalés vers l'arrière. Ainsi, ces boîtiers peuvent avoir des dimensions relativement importantes puisqu'en position rentrée (façade des boîtiers sensiblement dans le plan de la face latérale correspondante du coffret du téléviseur, ils ne risquent pas d'être cognés contre le tube cathodique du téléviseur.

Les deux boîtiers 4,5 étant identiques, on ne décrira ci-dessous que le boîtier 5. Le boîtier 5, représenté en position "sortie" en figure 2 a la forme générale d'un secteur de cylindre dont l'angle au centre peut être compris entre 30 et 90° environ. Ses dimensions sont principalement fonction des dimensions du ou des haut-parleurs que l'on veut y loger. Le boîtier 5 représenté ouvert à l'arrière sur le dessin, peut être fermé à l'arrière si on veut le conformer en enceinte close.

La façade 6 du boîtier 5 comporte une ou plusieurs découpes, telles que la découpe 7, correspondant au(x) haut-parleur(s) utilisé(s), et elle est recouverte par une grille-décor de protection 8.

Le boîtier 5 est mobile en rotation autour de tétons 9,10 formés sur un cadre rectangulaire 11 fixé dans la découpe 3A correspondante de la paroi 3. Le cadre 11 a, en section, sensiblement la forme d'un "L".

Une des branches de cet "L", qui s'étend vers l'extérieur du cadre, le long de la face intérieure de la paroi 3, sert à la fixation du cadre 11 sur la paroi 3. Cette fixation peut par exemple se faire par agrafage si le cadre 11 est en matière plastique et le coffret en bois ou matière similaire. L'autre branche du "L" s'encastre dans la découpe 3A.

La mise en place du boîtier 5 dans le cadre 11 se fait par simple encliquetage grâce à un dispositif de fixation 12 formé dans l'angle central des parois supérieure 13 et inférieure 14 du boîtier 5, c'est-à-dire près de l'axe de révolution de la forme de secteur cylindrique que présente ce boîtier.

Ce dispositif 12 est constitué essentiellement par une lèvre 15 légèrement élastique, formée dans les parois 13 et 14, seul le dispositif 12 relatif à la paroi 13 ayant été représenté sur le dessin. Cette lèvre 15 a une épaisseur plus faible que celle de la paroi 13. La face intérieure de la lèvre 15 arrive au ras de la face intérieure de la paroi 13. Cette lèvre 15 est en partie délimitée par une fente 16 ayant sensiblement la forme d'un "L" dont une branche, référencée 17, débouche à peu près dans la pointe de l'angle au centre de la paroi 13, et dont l'autre branche, référencée 18, s'étend à peu près parallèlement au côté 19 de la paroi 13, sur une longueur de quelques centimètres, le côté 19 étant le côté opposé à la façade 6. La branche 17 présente, à peu près en son milieu, un élargissement circulaire (ou semi-circulaire) 17A dont le diamètre correspond à celui des tétons 9,10. La longueur des tétons 9,10 est légèrement inférieure à l'épaisseur des parois 13,14.

L'extrémité 20 de la lèvre 15, délimitée par la branche 17, est relevée vers l'extérieur et son bord 21 arrive sensiblement au ras de la surface extérieure de la paroi 13.

Ainsi, pour mettre en place les boîtiers 4,5, on les engage de façon rectiligne dans leurs cadres respectifs, leurs façades 6 restant parallèles aux parois 2,3 du coffret, de façon que les côtés 19 des lèvres 15, s'appuient sur les tétons 9,10 respectifs, puis on pousse ces boîtiers perpendiculairement à leurs façades 6 de façon que les lèvres 15 puis leurs extrémités 20 glissent sur ces tétons jusqu'à ce que les bords 21 dépassent les tétons 9, 10 qui s'engagent dans les élargissements 17A. Les extrémités 20, qui s'étaient abaissées au passage des tétons, reviennent à leur position initiale grâce à l'élasticité des lèvres 15, et les tétons 9,10 sont emprisonnés dans les élargissements 17A.

La manipulation du boîtier 5, pour la commande de sa rotation autour des tétons 9,10, est facilitée par une lèvre 22 formée à l'extrémité de sa façade 6, à l'opposé de son axe de rotation, sur toute la hauteur du boîtier. La lèvre 22 a une largeur d'environ 10 mm et fait un angle d'environ 30° par rapport à la façade 6.

La course en rotation du boîtier 5 est limitée, à la fermeture par au moins une butée 23 formée près de la lèvre 22. A l'ouverture, la course est limitée par au moins une butée 24 formée sur la face courbe 25 du boîtier, près de son ouverture.

Pour pouvoir arrêter le boîtier 5 en n'importe quelle position angulaire comprise entre les positions extrêmes déterminées par les butées 23,24, on fixe par exemple sur la pente verticale du cadre 11 se trouvant en vis-à-vis de la face courbe 25 du boîtier 5 un dispositif de freinage tel qu'un tampon de feutre 26 frottant sur cette face 25.

## Revendications

1. Installation sonore, en particulier stéréophonique pour téléviseur, comportant au moins un boîtier (4, 5) pivotant dans l'épaisseur d'une paroi latérale du coffret du téléviseur, caractérisée en ce qu'il vient se fixer par encliquetage sur un cadre (11) apposé dans une découpe (3A) de la paroi latérale du coffret, grâce à des tétons (9, 10) solidaires du cadre et autour desquels pivote le boîtier.

2. Installation selon la revendication 1, caractérisée en ce que la section du cadre (11) a une forme de "L" permettant la pose automatique de ce cadre.

3. Installation selon l'une quelconque des revendications précédentes, caractérisée en ce que le cadre comporte un dispositif de frein permettant d'immobiliser le boîtier en n'importe quelle position angulaire entre ses positions extrêmes.

4. Installation selon l'une des revendications précédentes, utilisant un cadre (11) en matière plastique pour un coffret en bois ou particules de bois, caractérisée en ce que le cadre est fixé par agrafage sur le coffret du téléviseur.

5. Téléviseur comportant au moins une enceinte accoustique, caractérisé en ce que l'installation de cette ou ces enceintes est réalisée selon l'une des revendications précédentes.

## Patentansprüche

1. Akustische Anlage, insbesondere Stereoanlage, für einen Fernsehempfänger, die mindestens ein Gehäuse (4, 5) umfaßt, das in der Dicke einer Seitenwand des Kastens des Fernsehempfängers drehbar gelagert ist, dadurch gekennzeichnet, daß sie durch Einrasten an einem in einen Ausschnitt (3A) der Seitenwand des Kastens eingebauten Rahmen (11) befestigt wird, mit Hilfe von Zapfen (9, 10), die mit dem Rahmen fest verbunden sind und um welche das Gehäuse drehbar ist.

2. Anlage nach Anspruch 1, dadurch gekennzeichnet, daß der Querschnitt des Rahmens (11) die Form eines "L" hat, welche das automatische Einsetzen dieses Rahmens ermöglicht.

3. Anlage nach einem der vorhergehenden Ansprüche, dadurch gekennzeichnet, daß der Rahmen eine Bremsvorrichtung umfaßt, die es gestattet, das Gehäuse in jeder beliebigen Winkelstellung zwischen seinen äußersten Stellungen zu fixieren.

4. Anlage nach einem der vorhergehenden Ansprüche, bei der ein Rahmen (11) aus Kunststoff für einen Kasten aus Holz oder Holzteilchen verwendet wird, dadurch gekennzeichnet, daß der Rahmen durch Anheften am Kasten des Fernsehempfängers befestigt wird.

5. Fernsehempfänger, der wenigstens eine Lautsprecherbox umfaßt, dadurch gekennzeichnet, daß die Anbringung dieser Box oder dieser Boxen gemäß einem der vorhergehenden Ansprüche realisiert wird.

## Claims

1. Sound installation, in particular a stereophonic installation for a television set, including at least one box (4, 5) pivoting in the thickness of a side wall of the cabinet of the television set, characterized in that it is fixed by clipping onto a frame (11) set into a cut-out (3A) in the side wall of the cabinet, by virtue of studs (9, 10) integral with the frame and around which the box pivots.

2. Installation according to Claim 1, characterized in that the cross-section of the frame (11) has an "L" shape allowing this frame to be fitted automatically.

3. Installation according to any one of the preceding claims, characterized in that the frame includes a braking device making it possible to immobilize the box at any angular position between its extreme positions.

4. Installation according to one of the preceding claims, using a plastic frame (11) for a wooden or chipboard cabinet, characterized in that the frame is fixed by stapling to the cabinet of the television set.

5. Television set including at least one loudspeaker enclosure, characterized in that the installation of this or these enclosures is carried out according to one of the preceding claims.
